# EUROPEAN PATENT APPLICATION

(11) **EP 1 650 160 A1**
(43) Date of publication of application: **26.04.2006**
(21) Application number: 04077884.7
(22) Date of filing: 20.10.2004
(51) Int. Cl.: C01B 3/38, C01B 3/48, B01J 8/06, B01J 8/02

(54) **Process for the production of synthesis gas and reactor for such process**

(71) Applicant: Stichting Energieonderzoek Centrum Nederland, 1755 LE Petten (NL)
(72) Inventor: van Den Oosterkamp, Paul Francois, 1741 DC Schagen (NL); van Der Laag, Peter Cornelis, 1991 HG Velserbroek (NL)
(74) Representative: van Westenbrugge, Andries

(57) **Abstract**

The invention relates to a process and an apparatus for the production of synthesis gas comprising (a) providing a gaseous hydrocarbon stream; (b) subjecting a first part of the gaseous hydrocarbon stream (15) to an endothermic reaction thereby producing a first gaseous reaction product containing hydrogen (17); (c) subjecting a second part of the gaseous hydrocarbon stream (25) to an exothermic reaction thereby producing a second gaseous reaction product containing hydrogen (17); (d) transferring thermal energy from said exothermic reaction to said endothermic reaction; and (e) combining the first gaseous reaction product and the second gaseous reaction product produced in steps (b) and (c), thereby forming a gaseous reaction products mixture (37), and to a reactor (1) that can be used for such a process.

## Description

### Field of invention

The invention relates to a process for the production of synthesis gas and to a reactor that can be used for such a process.

### Background of invention

Steam reforming is a well known method for generating hydrogen from light hydrocarbon feeds and is carried out by supplying heat to a mixture of steam and a hydrocarbon feed while contacting the mixture with a suitable catalyst, e.g. a nickel catalyst. The steam reforming reaction may be represented as xH₂O + CₓH_{y} → x CO + (y/2+x) H₂, which is endothermic. Another known method for obtaining hydrogen from a hydrocarbon feed is the non-catalytic partial oxidation process in which the feed is introduced into an oxidation zone maintained in a fuel rich mode such that only a portion of the feed is oxidized. The partial oxidation reaction may be represented as CₓH_{y} + x/2 O₂ → x CO + y/2 H₂, which is exothermic.

The synthesis gas that is produced by these processes is characterised by the ratio of H₂ to CO in the product gas. Using steam reforming this ratio is typically 2:1 or higher. For the partial oxidation process this ratio is around 1.5:1. Depending on the ultimate application of the synthesis gas, a further gas purification or H₂: CO ratio adjustment may be carried out.

For applications that require a relatively pure hydrogen product, for example low temperature fuel cells, a further gas purification by a) employing shift conversion followed by selective oxidation or b) pressure swing adsorption may be used. Other applications require a H₂:CO ratio which is close to 2:1, for example the Gas to Liquids process to convert synthesis gas to liquid fuels by Fischer-Tropsch conversion.

An example of an apparatus wherein steam reforming and partial oxidation are performed is described in DE3521304. This document describes how synthesis gas is produced from a lower hydrocarbon gas by reforming part of the lower hydrocarbon gas in a steam reforming process and partially oxidising another part of the lower hydrocarbon gas. The synthesis gases obtained in these two processes are mixed and fed to a methanol synthesis plant. The thermal energy required to perform the steam reforming process is provided by combustion of part of the lower hydrocarbon gas. Disadvantages of this apparatus and this process are the high energy consumption, the high temperatures for the partial oxidation reaction and the fact that two reactors have to be used.

Another example of the use of a reactor wherein steam reforming and partial oxidation are performed is described in US5156821. The reactor described therein contains a steam reforming section, a partial oxidation (POx) section and a next steam reforming section, respectively. Disadvantages of this reactor are the complexity, the relatively high temperatures (up to 1700 °C) in the partial oxidation section and the limited possibility to tune the H₂/CO ratio, especially around a ratio of about 2:1.

### Summary

Hence, it is an object of the invention to provide a process and an apparatus which do not have the above-mentioned disadvantages. To this end, the invention provides a process for the production of synthesis gas, comprising:
a) providing a gaseous hydrocarbon stream;
b) subjecting a first part of the gaseous hydrocarbon stream to an endothermic reaction thereby producing a first gaseous reaction product containing hydrogen;
c) subjecting a second part of the gaseous hydrocarbon stream to an exothermic reaction thereby producing a second gaseous reaction product containing hydrogen;
d) transferring thermal energy from said exothermic reaction to said endothermic reaction; and
e) combining the first gaseous reaction product and the second gaseous reaction product produced in steps (b) and (c), thereby forming a gaseous reaction products mixture.

Further, the invention provides in a next aspect a reactor:
i) comprising a first and a second section;
   (1) an inlet to the first section for providing a first part of a gaseous hydrocarbon stream and a first gas to the first section;
   (2) an outlet from the first section for a first gaseous reaction product;
   (3) an inlet to the second section for providing a second part of a gaseous hydrocarbon stream and a second gas to the second section;
   (4) an outlet from the second section for a second gaseous reaction product;
ii) comprising a third section, connected with the outlet of the first section and with the outlet of the second section and arranged such that the gaseous reaction products from the first and second sections mix in this third section, thereby forming a gaseous reaction products mixture;
iii) wherein the first, second and third sections and the outlets of the first and second sections are arranged in the reactor such that the gaseous reaction products mixture of the first and second gaseous reaction products can flow along the first section;
iv) and comprising a reactor outlet from the third section for the gaseous reaction products mixture.

The advantages of the process and the reactor of the invention are that in an energy efficient way endothermic- and exothermic reaction are coupled. Especially, steam reforming (SR) and catalytic partial oxidation (CPO) processes can be performed in one reactor and further, the H₂/CO ratio can relatively easily be tuned, depending upon the desired application like e.g. a subsequent GTL process or a subsequent use of hydrogen by a fuel cell. Further, the energy consumption is relatively low, such that a reactor energy efficiency (lower heating value of the product gas divided by the lower heating value of the feed stream) of 85% or even larger can be obtained.

### Short description of drawings

Figure 1 schematically depicts an embodiment of the reactor of the invention.
Figure 2 schematically depicts an embodiment of the reactor of the invention, wherein the steam reforming section comprises a plurality of tubes.
Figure 3 schematically depicts several embodiments wherein the reactor of the invention can be used.
Figure 4 schematically depicts an embodiment according to the prior art.

### Description of invention

In an embodiment, the invention is directed to a process, wherein the endothermic reaction comprises a steam reforming reaction and wherein the exothermic reaction comprises a catalytic partial oxidation reaction. In this process, the reactor according to the invention can advantageously be used. Relevant reactions that can take place are described below:

**Table 1. Common reforming reaction schemes and heats of reaction:**

| | | | |
|---|---|---|---|
| | | | **ΔH°**_{**298**}**, kJ/mol** |
| Steam reforming of natural gas | CH₄ + H₂O ↔ 3H₂ + CO | (1) | 206 |
| Steam reforming of higher hydrocarbons | CₙHₘ + H₂O ↔ (m/2 + n) H₂ + nCO | (2) | |
| CO₂ reforming | CH₄ + CO₂ ↔ 2H₂ + 2CO | (3) | 247 |
| Water-gas shift | CO + H₂O ↔ H₂ + CO₂ | (4) | -41 |

In addition to the reactions mentioned, oxygen may also be used in the conversion, in which case some additional reactions are involved:

**Table 2. Common oxidation reaction schemes and reaction heats:**

| | | | |
|---|---|---|---|
| | | | **ΔH°** _{**298**}**, kJ/gmol** |
| Oxidation, partial | CH₄ + ½ O₂ ↔ 2H₂ + CO | (5) | -36 |
| | CH₄+3/2O₂ ↔ 2H₂O + CO | (6) | -520 |
| Oxidation, total | CH₄+2O₂ ↔ 2H₂O + CO₂ | (7) | -803 |

During the steam reforming reactions, undesired carbon deposits on the catalyst may also be formed as a result from the following reactions:

**Table 3. Common carbon formation schemes and reaction heats:**

| | | | |
|---|---|---|---|
| | | | **ΔH°** _{**298**}**, kJ/gmol** |
| Boudouard reaction | 2 CO ↔ C +CO₂ | (8) | -172 |
| Methane cracking | CH₄ ↔ C+2H₂ | (9) | -41 |
| CO reduction | H₂ +CO ↔ C+H₂O | (10) | -131 |

Steam reforming of methane (SMR) to produce hydrogen is an important industrial process. It is usually performed at high temperatures (500-950 °C) over Ni-based catalysts, but e.g. also lanthanide promoted nickel/alumina catalysts may be used. Partial oxidation processes are also well known in the art. The partial oxidation process (POx) comprises an exothermic reaction wherein a hydrocarbon-containing gas and an oxygen-containing gas, such as air, are reacted in a sub-stoichiometric ratio such that no total combustion (to CO₂ and H₂O) takes place. In the catalytic partial oxidation processes (CPO) a hydrocarbon-containing gas and an oxygen-containing gas are contacted with a catalyst at elevated temperatures to produce a reaction product containing high concentrations of hydrogen and carbon monoxide. The catalysts used in these processes are e.g. noble metals, such as platinum or rhodium, and other transition metals, such as nickel, usually on a suitable support. In case the hydrocarbon containing gas is a higher hydrocarbon, steam may also be added in order to prevent carbon formation on the catalyst. Hence, in the process of the invention, optionally a third gas comprising steam is provided to the second section. To this end, the second section may optionally have an inlet to provide the third gas to the second section, although steam may also be added to the second gas. In order to perform these reactions in the reactor, an embodiment of the above mentioned reactor of the invention is directed to a reactor wherein the first section comprises a steam reforming catalyst, and the second section comprises a catalytic partial oxidation catalyst. The catalysts may be commercially available catalysts and are known to the person skilled in the art.

With the process and reactor of the invention, reactor energy efficiencies can advantageously be obtained of 90-96 % for fuel cell applications and energy efficiencies of 85-94 % can be obtained for gas to liquid applications. In a preferred embodiment, the invention is directed to a process, wherein the transfer of thermal energy from the exothermic reaction to the endothermic reaction in step (d) is performed by bringing the gaseous reaction products mixture (of both endothermic and exothermic reaction) in thermal contact with a reactor or section of a reactor wherein the endothermic reaction is performed.

In the process of the invention, the ratio of the first part of the gaseous hydrocarbon stream for the endothermic reaction and the second part of the gaseous hydrocarbon stream for the exothermic reaction is between 1:50 and 1:1 on a molar basis, preferably between 1:20 and 1:1.5 on a molar basis. The gaseous hydrocarbon stream may e.g. comprise methane, ethane, propane, butane, methanol, ethanol, propanol, or their isomers or higher alkanes or alkanols. Typical gaseous streams are natural gas and LPG. The gaseous hydrocarbon stream may also comprise gasoline, naphtha or diesel, which may require an additional prereformer. Preferably, the gaseous hydrocarbon stream comprises methane, like natural gas. The gas hourly space velocities can be chosen by the person skilled in the art. For example, in an embodiment the invention is directed to a process wherein the gas hourly space velocity of the gases for the steam reforming reaction is between 2,000 and 50,000 h⁻¹, preferably between 4,000 and 10,000 h⁻¹, and wherein the gas hourly space velocity of the gases for the catalytic partial oxidation reaction is between 20,000 and 100,000,000 h⁻¹, preferably between 50,000 and 500,000 h⁻¹.

The first and second gaseous hydrocarbon streams may be preheated before entering the reactors or sections of the reactor wherein the endothermic and exothermic reactions take place, respectively. Further, also the water-containing gas (usually steam) for the endothermic reaction and the oxygen containing gas for the exothermic reaction, may be preheated. In an embodiment, the invention is directed to a process, wherein the inlet temperature of the first part of the gaseous hydrocarbon stream and steam is between about 100 to 600°C, and in another embodiment, the invention is directed to a process, wherein the inlet temperature of the second part of the gaseous hydrocarbon stream and an oxygen containing gas (like air) is between about 20 to 500°C. In preferred embodiments, the inlet temperature of the first part of the gaseous hydrocarbon stream and steam is between about 150 to 500°C, and the inlet temperature of the second part of a gaseous hydrocarbon stream and an oxygen containing gas is between about 50 to 400°C, respectively. When using oxygen (> 90%) as oxygen containing gas, the inlet temperature of the second part of the gaseous hydrocarbon stream and oxygen gas is between about 20 to 400°C, preferably between about 50 to 250°C. The pressure at the inlet of both first part of the gaseous hydrocarbon stream and steam and the second part of a gaseous hydrocarbon stream and an oxygen containing gas may be chosen between about 0-100 barg (pressure in bar above atmospheric pressure (bar gauge)), preferably between about 0-50 barg.

The H₂/CO ratio can be tuned by varying parameters like gas hourly space velocities, inlet temperatures, pressures, kind and amount of catalysts, etc. Also the ratio of the hydrocarbon containing gas to the first section and the second section respectively, can be used to tune the H₂/CO ratio. However, the ratio can further advantageously be tuned by varying the ratio of the water-containing gas and/or the oxygen containing gas to the first part and second part of the gaseous hydrocarbon streams, respectively. In an embodiment, the invention is directed to a process, wherein the steam to carbon ratio in the steam reforming reaction is between 1:1 to 1:10 on a molar basis (i.e. mol H₂O to mol carbon), preferably, the steam to carbon ratio of steam and the first part of the gaseous hydrocarbon stream for the endothermic reaction is between 1:1.5 to 1:5 on a molar basis. In yet another embodiment, the invention is directed to a process, wherein the carbon to oxygen (i.e. mol carbon to mol O₂) ratio (air factor) in the catalytic partial oxidation reaction is between 1:0.1 to 1:0.9. Preferably, the air factor of oxygen and the second part of the gaseous hydrocarbon stream for the exothermic reaction is between 1:0.5 to 1:0.75. The air factor is the stoichiometric ratio, wherein an air factor of 1 represents the amount of air that would be needed in case a complete combustion to CO₂ and H₂O would take place. Hence, an embodiment of the invention is also directed to a process, wherein the steam to carbon ratio in the steam reforming reaction is between 1:1 to 1:10 on a molar basis, and in yet a further embodiment, a process, wherein the carbon to oxygen ratio in the catalytic partial oxidation reaction is between 1:0.1 to 1:0.9 on a molar basis.

In this way, in a single reactor and in one parallel step of steam reforming and catalytic partial oxidation, H₂ and CO are produced, with a high energy efficiency and with H₂/CO molar ratios tuneable between about 1.5 and 4. Advantageously, the slip of e.g. methane in the gaseous reaction products mixture may be smaller than 2% (molar %). The outlet temperature of the reactor is between about 400 and 1000 °C, preferably between about 500 and 900 °C, which is advantageously lower than those of reactors of the state of the art, wherein partial oxidation without a catalyst is performed. Depending upon the application of H₂, or H₂ and CO, respectively, the desired reactor outlet temperature can be chosen. The capacity of the reactor can be up to about up to about 1.25 10⁶ Nm³/day of natural gas, which is equivalent to a production of about 100,000 barrels per day of Fischer-Tropsch liquids, produced by a Gas to Liquids (GTL) process.

In an embodiment, the invention is further directed to a process, wherein the gaseous reaction products mixture comprising hydrogen is subjected to a Gas to Liquids (GTL) process, e.g. in a subsequent reactor, reactor section or plant. In yet a further embodiment, the invention is directed to a process, wherein the gaseous reaction products mixture comprising hydrogen is fed to a fuel cell. For this latter application, the H₂/CO molar ratio is preferably chosen between about 2.1 and 2.7. Before being fed to a fuel cell, the gaseous reaction products mixture comprising hydrogen may be subjected to a water gas shift reaction in e.g. a water gas shift reactor, in order to increase the amount of hydrogen and decrease the amount of carbon monoxide (which may be detrimental to the fuel cell). Fuel cells may be of the types like e.g. AFC (Alkaline Fuel Cell), PAFC (Phosphoric Acid Fuel Cell), SOFC (Solid Oxide Fuel Cell), MCFC (Molten Carbonate Fuel Cell) and PEMFC (Proton Exchange Membrane Fuel Cell).

Depending upon the kind of feed gas, e.g. depending upon the amount of sulphur in the feed gas, the process of the invention may comprise add-on features like e.g. gas filters, adsorbents, prereformers, etc. Hence, in an embodiment, the invention is also directed to a process, wherein one or more selected from the group consisting of the gaseous hydrocarbon stream, the first part of a gaseous hydrocarbon stream and the second part of a gaseous hydrocarbon stream is subjected to a desulphurisation process, e.g. by bringing the gas into contact with a mineral selected from the hormite group, like sepiolite, or with metal oxides or with metal salts impregnated adsorbents like natural or synthetic clay mineral, active charcoal, natural or synthetic zeolite, molecular sieve, active alumina, active silica, silica gel, diatomaceous earth, pumice, etc..

The reactor of the invention, as described above, may be manufactured from materials known in the art, e.g. by materials like 316 SS, 321 SS, 347 SS, Incoloy 800 H, HK40. Unlike state of the art reactors, materials can be used that do not have to be able to withstand the disadvantageous high temperatures of the partial oxidation reaction, since a catalytic partial oxidation process is used.

In a preferred embodiment of the reactor of the invention, the first section comprises a plurality of tubes, the tubes having inlets and outlets, the tubes being arranged in the first section such that the first part of a gaseous hydrocarbon stream and the first gas flows from the inlet of the reactor to the inlets of the tubes, through the tubes to the outlets of the tubes, and arranged such that that the mixture of the first and second gaseous reaction products can flow along the plurality of tubes in the first section. In this way, thermal energy transfer from the gaseous reaction products to the section or reactor wherein the endothermic reaction takes place can be maximised. The reactor may further also comprise heat exchangers, baffles, etc. to further maximise heat exchange. Preferably, the diameter of the reactor tubes are between about 3 cm and 13 cm. The length of the reactor tubes can be between 1 m and about 12 m, depending on the required capacity of the process. The plurality of tubes contain a steam reforming catalyst for the steam reforming reaction. Preferably, thermal contact of the first section (endothermic reaction) and second section (exothermic reaction) with the outside atmosphere is minimised. Hence in an embodiment, the invention is directed to a reactor wherein the first section and the second section are arranged such that they are spaced apart from the peripheral wall of the reactor.

In yet a further aspect, the invention is directed to a plant for providing synthesis gas for a Gas to Liquids (GTL) facility comprising the reactor according to invention and a Gas to Liquids (GTL) plant (or reactor, or plurality of reactors).

Further, the invention is also directed to a plant for providing electricity comprising the reactor according to the invention and a fuel cell, which may further comprise a gas purification section comprising a shift reactor and a preferential oxidation reactor, downstream of the reactor according to the invention and upstream of the fuel cell. The fuel cell may e.g. comprises a proton exchange membrane fuel cell (PEMFC). In yet a further embodiment of the plant for providing electricity, the reactor according to the invention comprises a fourth section, separated from the first section, the second section and the third section, in contact with at least part of the reactor wall, and wherein the fourth section comprises the gas purification section (comprising a section for a shift reaction and a section for the preferential oxidation reaction).

Herein, section of a reactor means a part of a reactor, but the term also comprises parts of a reactor. Since in the first section and the second section independently reactions take place, the term section may also be interpreted as reactor. Reactor may also mean number of reactors. Herein, inlets and outlets may also mean one or more inlets and outlets, respectively. Where heating or preheating is mentioned, this may preferably comprise using part of the thermal energy of the exothermic reaction as (partial) source of thermal energy for this heating or preheating. The term step may also be directed to a number of steps; the term also comprises process, e.g. a batch type or continuous process.

### Embodiments

### Embodiment 1

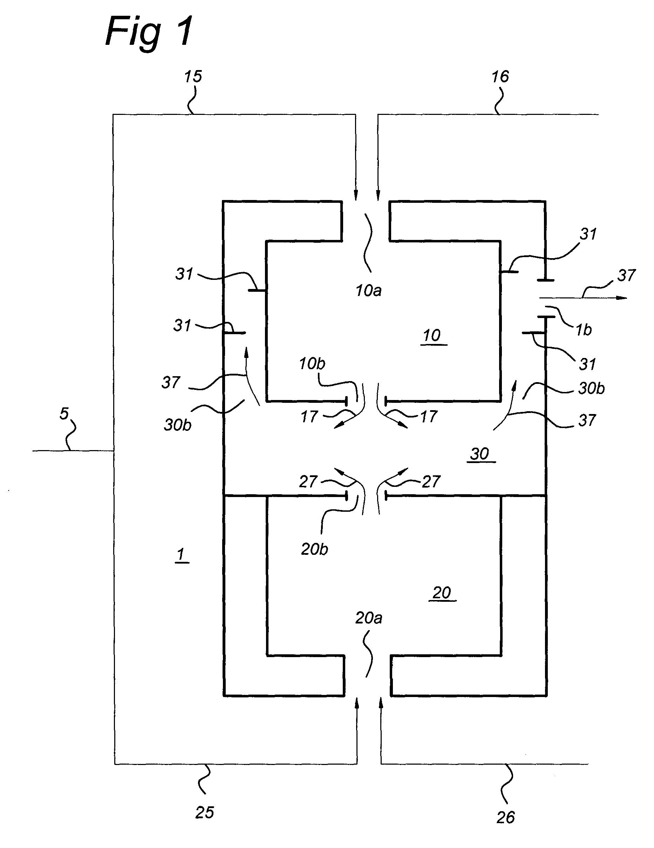

Figure 1 schematically depicts an embodiment of the reactor of the invention. Reactor 1 comprises a first and a second section 10 and 20, respectively; an inlet 10a to first section 10 for providing a first part of a gaseous hydrocarbon stream 15 and a first gas 16 to first section 10; an outlet 10b from first section 10 for a first gaseous reaction product 17. Reactor 1 further comprises an inlet 20a to second section 20 for providing a second part of a gaseous hydrocarbon stream 25 and a second gas 26 to second section 20; and an outlet 20b from the second section 20 for a second gaseous reaction product 27. Reactor 1 also comprises a third section 30, arranged such that the gaseous reaction products 17 and 27 from sections 10 and 20 mix in this section 30, thereby forming a gaseous reaction products mixture 37. The first, second and third sections, 10, 20, and 30, respectively, and the outlets 10b and 20b, respectively, are arranged in reactor 1 such that the gaseous reaction products mixture 37 of the first and second gaseous reaction products 17 and 27, respectively, can flow along first section 10. Reactor 1 further comprises a reactor outlet 1b for the gaseous reaction products mixture 37.

The gaseous hydrocarbon feed stream 5 is divided in a first part (stream 15) and a second part (stream 25).The first part of gaseous hydrocarbon stream 15 may e.g. comprise natural gas, from a natural gas stream 5, and first gas 16 may comprise steam. The inlet temperature at inlet 10a of the first part of the gaseous hydrocarbon stream 15 and steam 16 may e.g. be between 150 to 500°C. The second part of a gaseous hydrocarbon stream 25 also comprises natural gas and second gas 26 may comprise oxygen or air and steam (optionally, especially when heavier hydrocarbons are used as feed). The inlet temperature at inlet 20a of the second part of the gaseous hydrocarbon stream 25 and oxygen containing gas 26 is e.g. between 50 to 400°C. First section 10 may comprise a steam reforming catalyst like e.g. nickel plus promoters on alumina, noble metals like Pt or Rh on a suitable carrier, etc., and second section 20 may comprise a catalytic partial oxidation catalyst, e.g. a noble metal such as Pt , Ru, Ir Rh or mixtures thereof. The catalytic partial oxidation catalyst may e.g. be present on a carrier material. This carrier material may comprise a monolith, a ceramic foam or a metal structure, etc., as known to the person skilled in the art.

Reaction products mixture 37, comprising the gaseous reaction products 17 and 27 from sections 10 and 20 and comprising H₂ CO, CO₂ and H₂O is directed from section 30 via inlet 30b along section 10 to outlet 1b of reactor 1. Hereby, thermal energy is transferred to section 10. In order to improve the transfer of thermal energy, baffles 31 may be provided and/or other elements that promote heat transfer.

### Embodiment 2

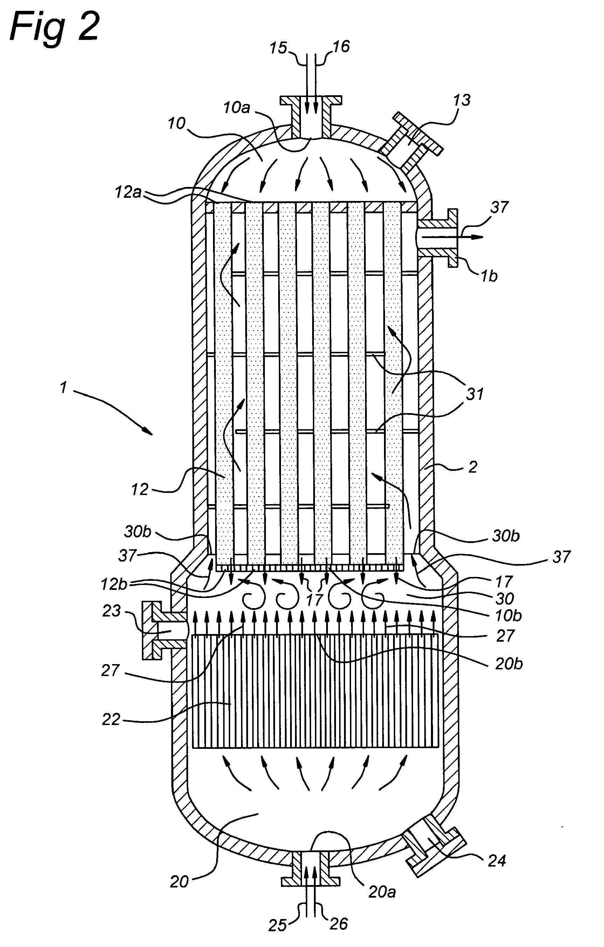

This embodiment, schematically depicted in figure 2, describes a variation on embodiment 1. In this embodiment of reactor 1, first section 10 comprises a plurality of tubes 12, the tubes having inlets 12a and outlets 12b. Hence, outlet 10b in this section 10 comprises a plate or a bottom plate, etc., connected to tubes 12, and having openings to third section 30 in the form of outlets 12b. However, other arrangements, e.g. without a bottom plate may also be possible, e.g. such that outlet 10b comprises one or more outlet(s) 12b. Tubes 12 in the first section 10 are arranged such that the first part of a gaseous hydrocarbon stream 15 and the first gas 16 flow from inlet 10 to inlets 12a, through tubes 12 to outlets 12b and are arranged such that that the mixture of the first and second gaseous reaction products 17, 27 (i.e. mixture 37) can flow through opening(s) 30b in first section 10 along the plurality of tubes 12 in this first section 10. The plurality of tubes 12 contains a steam reforming catalyst, which are known in the art and which are e.g. commercially available like various nickel-based catalysts. First section 10 may comprise baffles 31, in order to promote heat exchange. Second section 20 comprises a catalytic partial oxidation catalyst in the form of a porous system like a monolith bearing catalyst material, a zeolite provided with a catalyst metal, a metal structure bearing catalyst material, etc., thereby providing second section 20 with a plurality of outlets 20b. These openings are e.g. the openings of pores of a zeolite, or of channels of a monolith, or the openings in a metal structure, which are directed to third section 30. The straight channels as schematically depicted in figure 2 are only drawn in this way for the sake of understanding.

In this embodiment, first section 10 and second section 20 are arranged such that they are spaced apart from peripheral wall 2 of reactor 1. Reactor 1 may have additional inlets/outlets 13, 23 and 24 e.g. for providing and/or removing catalysts, etc..

Reactor 1 may be manufactured from e.g. 316 SS, 321 SS, 347 SS, Incoloy 800 H, HK40. Sections 10 and 20 may have relative dimensions of about 5 x 10 to 500 x 1000 (DxL) and 5 x 2 to 500 x 200 (DxL). The ratio of the volumes of the two sections 10 and 20 is between about 1:1 to 100:1, preferably between about 2:1 to about 50:1. The dimension of third section 30 may be relatively small and may e.g. have a height of about 5 cm to 50 cm. The dimensions of the plurality of tubes 12 will depend on the dimensions of first section 10. In general however, the length of the tubes will be between about 100 and 1000 cm, and the diameter will be between about 3 and 13 cm. The diameter of tubes 12, the length of tubes 12, and the amount and particle size of the steam reforming catalyst present in tubes 12 is chosen such that a homogenous flow and the required space velocities can be obtained and the heat transfer from section 30 to section 10 can be realised. Further, the distance between neighbouring tubes 12 is about 3 to 10 cm.

The gas hourly space velocity of the first part of a gaseous hydrocarbon stream 15 and first gas 16 through first section 10 may e.g. be between 2,000 and 50,000 h⁻¹, and the gas hourly space velocity of the second part of a gaseous hydrocarbon stream 25 and second gas 26 through second section 20 may e.g. be between 20,000 and 100,000,000 h⁻¹. Preferably, the gas hourly space velocities of the first part of a gaseous hydrocarbon stream 15 and the first gas through first section 10 is between 4,000 and 10,000 h⁻¹ and the second part of a gaseous hydrocarbon stream 25 and second gas through second section 20 is between 50,000 and 500,000.

Additional preheaters, not shown in figures 1 and 2 may be used to preheat the gasses such that the desired inlet temperatures at inlets 10a and 20a are obtained. To obtain the required temperature at these inlets, also heat of the reactor may be used (in addition to preheating).

### Embodiment 3

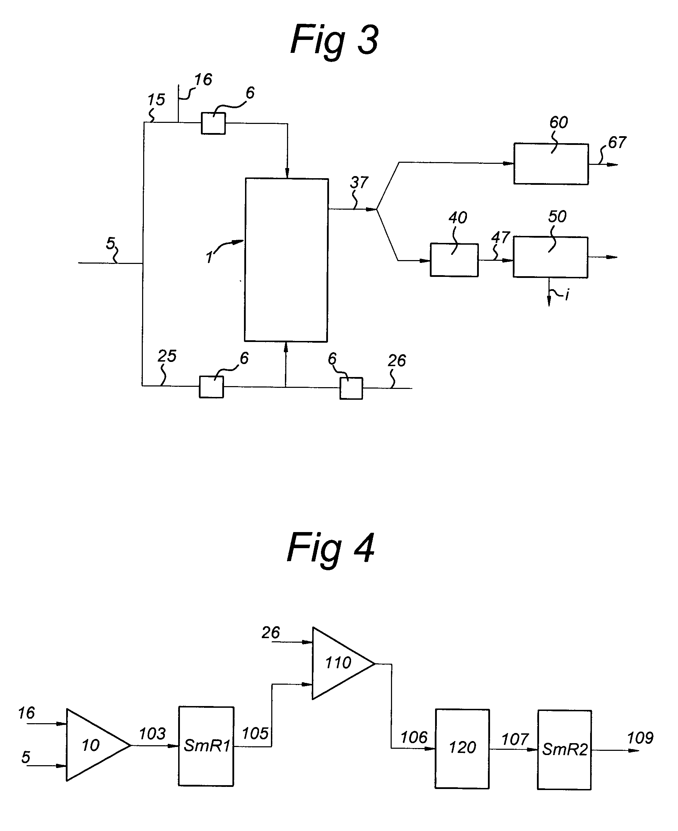

This embodiment, schematically depicted in figure 3, describes several embodiments wherein the reactor of the invention can be used.

Gaseous hydrocarbon stream 5 is divided in two parts, the first part of a gaseous hydrocarbon stream 15 and the second part of a gaseous hydrocarbon stream 25. Steam 16 is added to stream 15 and may further optionally be preheated by a preheater 6. Steam 16 may alternatively also be added to stream 15 after this optional preheater 6. The first part of a gaseous hydrocarbon stream 15 and steam as first gas 16 are led to reactor 1 (as described above). Oxygen or air 26 is added to stream 25 and may be preheated by other optional preheaters 6. The second part of a gaseous hydrocarbon stream 25 and oxygen or air 26 as second gas 26 are also led to reactor 1. The second gas 26, comprising oxygen or air, may further comprise steam (e.g. when heavier hydrocarbons are used). Alternatively, steam may separately be introduced via another inlet in section 20 (not shown in the figures). In reactor 1, the steam reforming and catalytic partial oxidation takes place, as described above. Gaseous reaction products mixture 37, comprising CO, H₂, CO₂ and H₂O exits from reactor 1 and may be used in e.g. a fuel cell 50 or alternatively in a GTL plant 60, thereby providing electricity (indicated by reference symbol i) or Fischer-Tropsch reaction products 67, respectively. In case gaseous reaction products mixture 37 is used as fuel for a fuel cell 50, a gas purification section (encompassing for example a water gas reactor (HTS and/or LTS) and a preferential oxidation reactor) 40 may be applied, such that an H₂ enriched (relative to stream 37) and CO diminished (relative to stream 37) stream 47 is provided. The water gas shift reactor of section 40 may be integrated in reactor 1 as additional compartment (not shown), e.g. as surrounding part of reactor 1 or contacting to at least part of reactor wall 2. In this way, the energy efficiency of reactor 1 can be increased.

Additional features may be present, e.g. gaseous hydrocarbon stream 5, first part of a gaseous hydrocarbon stream 15 and/or second part of a gaseous hydrocarbon stream 25 may e.g. be subjected to a desulphurisation process with gas filters, adsorbents, etc. Such gas filters or adsorbents may comprise e.g. sepiolite and/or support materials comprising a metal salt, which filter sulphur containing compounds like e.g. THT out of one or more of these streams 5, 15 and 25. Support materials may e.g. be chosen from natural or synthetic clay minerals, active charcoal, natural or synthetic zeolites, molecular sieves, active alumina, active silica, silica gel, diatomaceous earth and pumice, and the metal (as a salt and/or oxide) may be selected from groups Ia, Ib, IIb, IIIb, IVb, Vb, VIIb, VIII of the periodic system, like e.g. chromium, manganese, iron, cobalt, nickel, copper or zinc, as described in PCT/NL2004/000307, which is herein incorporated by reference.

### Embodiment 4

This embodiment describes several applications of the reactor of the invention in more detail.

The feedstock for reactor 1 (e.g. as described in embodiment 2) is Groningen quality natural gas of which the specification is given in the table 4 below.

**Table 4: Feed specification (gaseous hydrocarbon stream 5)**

| Quality: | |
|---|---|
| Methane mol.% | 78.35 |
| Ethane mol.% | 4.13 |
| Propane mol. % | 0.95 |
| 2-Methylpropane mol.% | 0.15 |
| n-Butane mol. % | 0.15 |
| Pentane mol. % | 0.04 |
| Hexane mol.% | 0.05 |
| Nitrogen mol.% | 13.77 |
| Carbon dioxide mol.% | 2.21 |
| Carbon content in NG mol.% | 91.36 |
| **Impurities**: | |
| Tetrahydrothiophene (THT) mg/Nm³ | 18 |
| Other Sulphur components' mg/Nm³ | < 1 |
| **B.L. conditions :** | |
| Temperature at B.L.² °C | 20 |
| Pressure at B.L. bara | 50 mbarg |

| | |
|---|---|
| ¹ Other Sulphur components are : H₂S, CS₂, COS, Methyl mercaptan and Ethyl mercaptan. | |
| ² B.L.: Battery Limits | |

For the application of reactor 1 as a primary reformer in a fuel cell system, a maximum hydrogen concentration in the exit of the reformer is aimed at, while for the Gas to Liquids application, a H₂ to CO molar ratio of 2.0 is the target product specification. For the steam reforming part of the reactor, a minimum steam to carbon ratio of 1.5 is usually preferred in order to prevent undesired carbon formation as results of the Boudouard reaction.

The following applications will be described in more detail: a primary reformer for a stationary fuel cell system, syngas capacity circa 150 kWh, using air as oxidant (embodiment 4.1), a primary reformer for a Gas to Liquids plant, syngas capacity circa 1340 kWh, on the basis of air as oxidant (embodiment 4.2.1) and a primary reformer for a Gas to Liquids plant, syngas capacity circa 780 kWh, on the basis of oxygen as oxidant (embodiment 4.2.2). The Gas to Liquids cases are not sized to full-scale, but rather represent typical sizes of a demonstration reactor. Scale-up of such a demonstration reactor to an industrial size reactor is known to the person skilled in the art.

### Embodiment 4.1: heat integrated reactor for a stationary fuel cell system

In this case, reactor 1 provides the synthesis gas 37 that may be purified in a number of steps (e.g. in water gas shift reactor 40) to reformate which is suitable as feed to a PEMFC fuel cell 50. This purification includes the shift conversion in two steps (HTS and LTS respectively) and preferential oxidation of carbon monoxide to a low concentration (< 10 ppm). Primary feed (natural gas) 5 is desulphurised at ambient conditions using a suitable adsorbent (not shown in figures 1-3; examples are described above). Desulphurised fuel 15 is mixed with steam 16 and preheated by a preheater 6 to 450 °C (with sensible heat present in the system or with heat generated in an after burner) at a pressure of 1.5 bara, before it enters first section 10 (SMR section) of reactor 1. The steam to carbon ratio, S/C, amounts 2.0 mol/mol. The outlet temperature (outlet 10b, comprising outlets 12b, referring to figure 2) of section 10 is 750 °C, which corresponds to a hydrocarbon conversion ratio of at least 99 % (thermodynamically equilibrium).

The thermal duty (as a result of the heat of reaction) of the endothermic SMR process is provided by the integrated exothermal CPO process, which is fed by a natural gas 25 and air 26 mixture via inlet 20a. The amounts of natural gas and oxidant (air) are tuned to match the thermal duty of SMR section 10 and to obtain a sufficiently high hydrogen production rate. Thermal balancing of the endothermic SMR section 10 by the exothermic CPO section 20 is achieved using a sub-stoichiometric oxygen to carbon ratio, O₂/C of about 0.70 mol/mol. The natural gas 25 and air 26 mixture is preheated to 300 °C (by supplying sensible heat from the system or by heat from an afterburner), before it enters the CPO section 20 of reactor 1 at inlet 20a at 1.5 bara. The reactor effluent gas 37 has a temperature of about 500 °C, while the combined concentration of hydrogen plus carbon monoxide amounts to 52.0 vol.-%. The hydrogen to carbon monoxide ratio, H₂/CO, amounts to about 2.4 mol/mol.

Reactor 1 is a highly efficient syngas producer, as is demonstrated by its thermal efficiency ratio of about 94.0 % (AspenPlus calculation). The thermal efficiency is thereby defined as the ratio of the lower heating values of the product syngas (hydrogen + carbon monoxide) to the total fuel consumption (SMR + CPO). The corresponding ratio of natural gas feeds to the CPO respectively SMR sections is 2.11 mol/mol. The syngas production rate (H₂ + CO) amounts 309 kW based on the lower heating value. Heating and exergy values of common substances and molecular weights are summarized in table 5 below (1 Nm³ corresponds to 44.06 mol).

**Table 5. Thermodynamic properties of common substances.**

| [kJ/mol] @ 20°C, 1 bara | **LHV** | **HHV** | **EXY** | **Mr** [g/mol] |
|---|---|---|---|---|
| Natural Gas | 719.84 | 796.78 | 744.64 | 19.339 |
| H₂ | 241.82 | 285.69 | 235.20 | 2.016 |
| CO | 282.99 | 282.99 | 275.29 | 18.010 |

### Embodiment 4.2: heat integrated reactor for gas to liquids applications

A Gas to Liquids (GTL) process converts a synthesis gas to liquid fuels through a Fischer-Tropsch reaction of hydrogen with carbon monoxide. For a Fischer-Tropsch reactor the ideal ratio of hydrogen to carbon monoxide is preferably 2:1. In the existing Gas to Liquids plants, the synthesis gas is mostly being produced by non-catalytic partial oxidation. In this case, the resulting gas produces a synthesis gas with a ratio of H₂/CO of 1-1.5, which is short in hydrogen for the Fischer-Tropsch reaction. An add-on steam reformer unit usually produces the supplemental hydrogen. As the partial oxidation is carried out with oxygen, an oxygen plant (air separation plant) is also needed. The capital cost of the syngas generation, including the air separation plant, amounts to over 50 % of the total capital expenditure of the Gas to Liquids plant.

In the case of the heat integrated reactor 1 as shown in figures 1-3, however, the syngas composition required for the Fischer-Tropsch process can be realised in a single reactor. Moreover, the process conditions (in particular temperatures) are much more moderate than in the conventional partial oxidation reactor which produces syngas at a temperature of about 1300 °C, which also necessitates the use of expensive high alloy materials. In addition, this high product temperature results in a vast amount of excess steam that has to be utilised elsewhere (for example in steam turbines). However, in the proposed heat-integrated reactor for the GTL case, the product gas exits the reactor at about 700 °C. As a result of lower temperatures in the reactor, less exotic and therefore cheaper materials of construction can be used and much less excess steam is being produced. This increases the overall efficiency of the synthesis gas production but also of the total GTL scheme.

Referring to figure 3, primary natural gas feed 15 is mixed with steam 16 and preheated to 450 °C by a preheater 6, before it enters the **SMR** section 10 of reactor 1 at a pressure of 1.5 bara. The steam to carbon ratio (S/C) amounts 2.0. The outlet equilibrium temperature of the SMR section is 750 °C at outlets 12b, which corresponds to a hydrocarbon conversion ratio of at least 99 %. The thermal duty of the endothermic SMR process is again supplied by the integrated exothermal CPO process, which is fed by a natural gas 25 and air 26 mixture, entering at inlet 20a. The amounts of natural gas 25 and oxidant (air) 26 are tuned in order to match the thermal duty of the SMR section and to obtain a product syngas H₂/CO ratio of exactly 2.0 mol/mol. Alternatively, instead of air as oxidizing agent, oxygen can be used.

### Embodiment 4.2.1: heat integrated reactor for gas to liquids applications with air as oxidant

Thermal balancing and product gas composition balancing are achieved using a sub-stoichiometric oxygen to carbon ratio, O₂/C of about 0.60 in the feed to the CPO section 20. The natural gas 25 and air 26 mixture is preheated to 300 °C with one or more of the preheaters 6 present in stream 25 and stream 26, respectively, before it enters the CPO section 20 of reactor at inlet 20a at about 1.5 bara. The CPO product gas has an equilibrium temperature of about 801 °C. The temperature of product syngas 37 amounts to 700 °C in section 30, while the combined concentration of hydrogen and carbon monoxide amounts to 50.6 vol.%. The hydrogen to carbon monoxide ratio, H₂/CO, amounts 2.0 mol/mol, as is required for GTL applications.

Reactor 1 for Gas to Liquids applications is a highly efficient syngas producer, as is demonstrated by its thermal efficiency ratio of 89.3 % (AspenPlus calculation). The corresponding ratio of natural gas feed to the CPO and SMR sections respectively is 13.2 mol/mol. The syngas production rate (H₂ + CO) in this example amounts 1341 kW (i.e. 18.90 kmol/hr), based on the lower heating value.

### Embodiment 4.2.2: heat integrated reactor for gas to liquids applications with O₂ as oxidant

In case oxygen is used rather than air as an oxidizing agent, thermal balancing is achieved using the same sub-stoichiometric oxygen to carbon ratio, O₂/C of 0.6, since this releases the same amount of sensible heat. The natural gas 25 and oxygen 26 mixture is preheated (see above) to only 150 °C to prevent the risk of soot formation and pre-ignition, before it enters the CPO section 20 of reactor 1 at inlet 20a at 1.5 bara. The CPO product gas exiting the CPO section 20 at outlets 20b of the reactor 1 has an equilibrium temperature of about 1035 °C. The temperature of the reactor synthesis gas 37 has a similar value of 700 °C, while the joint concentration of hydrogen and carbon monoxide increases to 85.4 vol.%. The hydrogen to carbon monoxide ratio, H₂/CO, amounts to 2.0 mol/mol.

Reactor 1 for Gas to Liquids applications is a highly efficient syngas producer, as is demonstrated by its adiabatic thermal efficiency of 92.3 %. The corresponding ratio of secondary to primary feed consumption is 7.0 mol/mol. The syngas production rate (H₂ + CO) in this example amounts 781 kW (i.e. 11.01 kmol/hr), based on the lower heating value.

In table 6, a summary is given of typical process characteristics for above mentioned applications (4.1, 4.2.1 and 4.2.2) with natural gas as feed.

**Table 6: characteristics for above mentioned applications with natural gas as feed.**

| | **FC-applications; air as oxidant** | **GTL-applications; air as oxidant** | **GTL-applications; oxygen as oxidant** |
|---|---|---|---|
| Capacity range (Nm³/day)¹ | 100-10,000 Nm³/day | 1.24-12.4 10⁶ Nm³/day 10,000-100,000 Bbl/d | 1.24-12.4 10⁶ Nm³/day 10,000 - 100,000 Bbl/d |
| id. (barrels per day, bbl/d) : | | | |
| Fuel ratio CPO/SMR | 1.5-2.5 | 10-20 | 5-10 |
| sections (mol/mol) : | (2.1) | (13.2) | (7.0) |
| Steam/carbon ratio SMR section | 1.5 - 4 | 1.5 - 4 | |
| (mol/mol) : | (2.0) | (2.0) | |
| Air factor CPO² : | 0.65-0.75 (0.70) | 0.65-0.70 (0.70) | 0.5-0.7 (0.60) |
| Temperatures | | | |
| *SMR inlet :* | 150 - 450 °C | 150 - 500 °C | 150 - 500 °C |
| | (300 °C) | (450 °C) | (450 °C) |
| *CPO inlet :* | 250 - 400 °C | 250 - 400 °C | 50-250 °C |
| | (300 °C) | (300 °C) | (150 °C) |
| *HIR outlet :* | 500 - 900 °C | 500 - 900 °C | 500 - 900 °C |
| | (500 °C) | (700 °C) | (700 °C) |
| Pressure range : | 1.2-2.0 bara | 1.2-40 bara | 1.2-40 bara |
| | (1.5 bara) | (1.5 bara) | (1.5 bara) |
| Molar ratio H₂/CO product : | 2.1-2.7 | 1.5-3.0 | 1.5-4.0 |
| | (2.4) | (2.0) | (2.0) |
| Energy efficiency³ : | 90 - 96 % | 85 - 93 % | 85 - 94 % |
| | (94 %) | (89 %) | (92 %) |
| Methane slip (mol %) : | <2 % | <2 % | <2 % |
| Heat transfer coeff.⁴ : | 50 - 200 W/m².K (115 W/m².K) | | |
| Dimensions | | | |
| *SMR section, D x L :* | (50 x 100 cm) | | |
| *CPO section, D x L :* | (50 x 20 cm) | | |

| | | | |
|---|---|---|---|
| ¹= fuel consumption, under continuous operation. | | | |
| ² = stoichiometry ratio (= 1.0 for complete combustion). | | | |
| ³ = lower heating value of product stream / lower heating value of feed stream | | | |
| ⁴ = represents the efficiency in which thermal energy is transferred from section 30 to section 10 (SMR section). The higher this value, the less surface is necessary to realize transfer of thermal energy. | | | |

The values shown in table 6 represent the parameters that can be chosen and results that can be obtained when natural gas is chosen as gaseous hydrocarbon stream. In general, the same values will apply when other light hydrocarbons are chosen, e.g. ethane, propane, butane, and LPG, etc. For heavier hydrocarbons, like e.g. naphtha or diesel, prereforming will be applied, leading to a methane rich gas, that can be applied under the conditions from table 6 in the reactor and reaction of the invention.

### Embodiment 5: heat integrated reactor compared to state of the art reactor

Two cases (a low and a high pressure case respectively) were simulated, using the reactor of US5156821. The simulation has been performed on basis of the model as depicted in figure 4. The calculation was done with the objective to produce a synthesis gas with a H₂ to CO ratio of 2.0. This design specification was included as a constraint in the calculations. The model comprises the following elements (see figure 4):
- Heating of natural gas 5 and heating of steam 16, mixing of natural gas 5 and steam 16 (corresponding to the process in chamber 4 of figure 1 of US5156821) in a reactor or part of a reactor 10, providing a mixture stream 103;
- Conversion of the mixture of natural gas and steam 103 in the first steam methane reforming compartment steam SMR1 (corresponding to the process in tubes 5 of figure 1 of US5156821);
- Adding oxygen 26 to product 105 of first steam methane reforming compartment SMR1 in a reactor or part of a reactor 110 (corresponding to the process in partial oxidation chamber 9 of figure 1 of US5156821, wherein oxygen via inlet port 11 is provided);
- Converting the product of SMR1 105 and oxygen (i.e. stream 106) in a partial oxidation reactor 120 (corresponding to the process in partial oxidation chamber 9 of figure 1 of US5156821). This is simulated as being done in a adiabatic operating Gibbs reactor (POx reactor 120), which implies that there is no heat exchange with the surroundings, but POX reactor 120 provides all necessary reaction heat;
- Conversion of product from this POx reactor 120 in a second steam methane reforming reactor or part of a reactor SMR2 to a final product 109 (corresponding to the process in the lower portion of the reactor comprising catalyst 10 of figure 1 of US5156821);
- Cooling of product stream 109 to provide heat to the reactor SMR 2 and SMR1, satisfying the heat of reaction in these reactors.

The reactors in this model wherein the steam reforming takes place, sections SMR1 and SMR2, are simulated as Gibbs reactors. For SMR 1 the conversion level is fixed at 25 %, a value mentioned in US5156821; this value determines the exit temperature of SMR1. Reactors or part of reactors (sections) correspond to those of figure 1 of US5156821. With the data from example 1 of US5156821, two simulations were performed with either a low pressure (2 bara) or a high pressure (40 bara). For the AspenPlus calculation with respect to the prior art reactor, also heat exchangers in streams 5, 16 and 109 of figure 4 were included (not shown in figure 4).

For the low pressure case, the hydrocarbon conversion in SMR1 is fixed at 25%. This results in an calculated exit temperature of SMR1 of about 500°C .When product 105 is converted with oxygen in a POx reaction in reactor 120, the outlet temperature thereof appears to be about 1760°C. Under these conditions the conversion in the POx reactor is practically complete. Product 107 of POx reactor 120 is then fed to second steam methane reforming reactor SMR2.

The energy efficiency based on the LHV of product 109, with respect to the feed 5 can be calculated. In this calculation the heating of streams 6 and 5 and the cooling of stream 109 has been taken into account. In this way an energy efficiency is calculated of 62.2%.

A similar calculation as presented for the low pressure case was executed for a pressure of 40 bara, a pressure which is also described in example 1 of US5156821. In order to obtain a hydrocarbon conversion of 25% in first steam reforming reactor SMR1, the exit temperature thereof has to be about 650°C. The calculated outlet temperature of POx reactor 120 is 1831°C. For the high pressure case, a reactor energy efficiency was calculated of 63.0 %.

For both the low and high pressure case, the compression of fluids has not been taken into consideration. Therefore the calculated efficiencies should primarily be used in a comparative way.

The calculations show that for both the low pressure case and for the high pressure case the target ratio of H₂ to CO = 2.0 can be achieved theoretically with the reactor as proposed in US5156821. This is however done with a significantly lower reactor energy efficiency than provided for the reactor of the invention. In addition, the calculated reactor data (in particular temperatures) are in a range that are outside the normal operating practice. Further, the reactor of the prior art does not provide the flexibility in varying H₂/CO ratios as is possible with the process and reactor of the present invention.

The drawings herein usually only comprise the important elements and features that are necessary to understand the invention. Beyond that, the drawings are not on scale. The invention is not limited to those elements, shown in the schematic drawings. Features which are not shown in the figures, but which may also be present are e.g. (pre)heaters, e.g. to provide additional heating of section 10 or section 20, heaters to provide heating of the feed gases 15, 16, 25 and 26, temperatures controllers, pressure controllers, partial pressure controllers, gas composition or gas components analysers, controllers for the composition of the gas entering at inlet 10a, which can be used to vary the steam to carbon ratio, controllers for the composition of the gas entering at inlet 20a, which can be used to vary the air factor, etc., and which may be provided by the person skilled in the art. For example, it will be clear to the person skilled in the art that means for providing gasses like gas inlets, pumps, vacuum pumps, conduits, jets, valves, means for controlling gas pressures like pressure meters, sensors, etc. can be provided to introduce, control, remove, etc. the gasses, and control their (partial) pressure in reactor 1, additional reactors and transport lines. The reactor of the invention can also be used at elevated pressure. Further, the invention is not limited to the embodiments described herein.

## Claims

1. A process for the production of synthesis gas, comprising:
a) providing a gaseous hydrocarbon stream;
b) subjecting a first part of the gaseous hydrocarbon stream to an endothermic reaction thereby producing a first gaseous reaction product containing hydrogen;
c) subjecting a second part of the gaseous hydrocarbon stream to an exothermic reaction thereby producing a second gaseous reaction product containing hydrogen;
d) transferring thermal energy from said exothermic reaction to said endothermic reaction; and
e) combining the first gaseous reaction product and the second gaseous reaction product produced in steps (b) and (c), thereby forming a gaseous reaction products mixture.

2. The process according to claim 1, wherein the endothermic reaction comprises a steam reforming reaction and wherein the exothermic reaction comprises a catalytic partial oxidation reaction.

3. The process according to claim 2, wherein the ratio of the first part of the gaseous hydrocarbon stream for the endothermic reaction and the second part of the gaseous hydrocarbon stream for the exothermic reaction is between 1:50 and 1:1 on a molar basis.

4. The process according to claims 2 or 3, wherein the steam to carbon ratio in the steam reforming reaction is between 1:1 to 1:10 on a molar basis.

5. The process according to one of claims 2-4, wherein the carbon to oxygen ratio in the catalytic partial oxidation reaction is between 1:0.1 to 1:0.9 on a molar basis.

6. The process according to one of claims 2-5, wherein the inlet temperature of the first part of the gaseous hydrocarbon stream and steam is between 100 to 600°C.

7. The process according to one of claims 2-6, wherein the inlet temperature of the second part of the gaseous hydrocarbon stream and an oxygen containing gas is between 20 and 500°C.

8. The process according to one of claims 1-7, wherein the transfer of thermal energy from the exothermic reaction to the endothermic reaction in step (d) is performed by bringing the gaseous reaction products mixture in thermal contact with a reactor or section of a reactor wherein the endothermic reaction is performed.

9. A reactor:
i) comprising a first and a second section (10, 20);
(1) an inlet (10a) to the first section (10) for providing a first part of a gaseous hydrocarbon stream (15) and a first gas (16) to the first section (10);
(2) an outlet (10b) from the first section (10) for a first gaseous reaction product (17);
(3) an inlet (20a) to the second section (20) for providing a second part of a gaseous hydrocarbon stream (25) and a second gas (26) to the second section (20);
(4) an outlet (20b) from the second section (20) for a second gaseous reaction product (27);
ii) comprising a third section (30), connected with the outlet (10b) of the first section (10) and with the outlet (20b) of the second section (20) and arranged such that the gaseous reaction products (17, 27) from the first and second sections (10, 20) mix in the third section (30), thereby forming a gaseous reaction products mixture (37);
iii) wherein the first, second and third sections (10, 20, 30) and the outlets (10b, 20b) are arranged in the reactor (1) such that the gaseous reaction products mixture (37) of the first and second gaseous reaction products (17, 27) can flow along the first section (10);
iv) and comprising a reactor outlet (1b) from third section (30) for the gaseous reaction products mixture (37).

10. The reactor according to claim 9, wherein the first section (10) comprises a steam reforming catalyst, and wherein the second section (20) comprises a catalytic partial oxidation catalyst.

11. The reactor according to claims 9 or 10, wherein the first section (10) comprises a plurality of tubes (12), the tubes having inlets (12a) and outlets (12b), the tubes being arranged in the first section (10) such that the first part of a gaseous hydrocarbon stream
(15) and the first gas (16) flows from inlet to inlets (12a), through tubes (12) to outlets (12b), and arranged such that that the mixture (37) of the first and second gaseous reaction products (17, 27) can flow along the plurality of tubes (12) in the first section (10).

12. A plant for providing Gas to Liquids (GTL) products comprising the reactor (1) according to one of claims 9-11 and a Gas to Liquids (GTL) plant (60).

13. A plant for providing electricity comprising the reactor (1) according to one of claims 9-11 and a fuel cell (50).

14. The plant according to claim 13, further comprising a gas purification section (40), downstream of the reactor (1) and upstream of the fuel cell (50).

15. The plant according to claim 14, wherein the reactor (1) comprises a fourth section, separated from the first section (10), the second section (20) and the third section (30), in contact with at least part of the reactor wall (2), and the fourth section comprising the gas purification section (40).
